# EUROPEAN PATENT SPECIFICATION

(11) **EP 2 258 051 B1**
(45) Date of publication and mention of the grant of the patent: **05.09.2012**
(21) Application number: 08775140.0
(22) Date of filing: 16.07.2008
(51) Int. Cl.: H04B 7/04

(54) **Rank dependent CQI back-off**
Reduzierung der CQI in Abhängigkeit vom Rang
Diminution de l'indicateur de qualité de canal en fonction du rang

(30) Priority: 19.03.2008 US 37769 P; 11.07.2008 US 171937
(43) Date of publication of application: 08.12.2010
(73) Proprietor: Telefonaktiebolaget L M Ericsson (PUBL), 164 83 Stockholm (SE)
(72) Inventor: RINGSTRÖM, Markus, S-113 30 Stockholm (SE); KANGAS, Ari, S-181 30 Lidingö (SE)
(74) Representative: Kühn, Friedrich Heinrich
(86) International application number: PCT/EP2008/059319
(87) International publication number: WO 2009/115136

(56) References cited:
- EP-A- 1 838 003
- WO-A-2005/043844
- WO-A-2006/065181
- WO-A-2006/138337
- US-A1- 2006 133 521
- KLAUS I PEDERSEN ET AL: "Frequency Domain Scheduling for OFDMA with Limited and Noisy Channel Feedback" VEHICULAR TECHNOLOGY CONFERENCE, 2007. VTC-2007 FALL. 2007 IEEE 66TH, IEEE, PI, 1 September 2007 (2007-09-01), pages 1792-1796, XP031147716 ISBN: 978-1-4244-0263-2
- ISTVAN Z KOVACS ET AL: "Effects of Non-Ideal Channel Feedback on Dual-Stream MIMO-OFDMA System Performance" VEHICULAR TECHNOLOGY CONFERENCE, 2007. VTC-2007 FALL. 2007 IEEE 66TH, IEEE, PI, 1 September 2007 (2007-09-01), pages 1852-1856, XP031147728 ISBN: 978-1-4244-0263-2
- DANIEL V. P. FIGUEIREDO: "MIMO Multi-user OFDMA Link and System Performance" WORKSHOP ON SMART ANTENNAS, [Online] 1 March 2007 (2007-03-01), pages 1-54, XP002518989 Vienna Retrieved from the Internet: URL:http://www.ist-surface.org/others/MIMO -MU%20Viena%20SURFACE%20AAU%20NET.pdf> [retrieved on 2009-03-11]
- FERNANDES P ET AL: "Effects of multi user MIMO scheduling freedom on cellular downlink system throughput" VEHICULAR TECHNOLOGY CONFERENCE, 2004. VTC2004-FALL. 2004 IEEE 60TH LOS ANGELES, CA, USA 26-29 SEPT. 2004, PISCATAWAY, NJ, USA,IEEE, vol. 2, 26 September 2004 (2004-09-26), pages 1148-1152, XP010786802 ISBN: 978-0-7803-8521-4
- NOKIA: "On UL Feedback of DL SU-MIMO Rank and DL SU-MIMO Rank Adaptation" 3GPP DRAFT; R1-070387, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. tsg_ran\WG1_RL1\TSGR1_47bis\Docs, no. Sorrento, Italy; 20070115, 9 January 2007 (2007-01-09), XP050104419

## Description

### FIELD OF THE INVENTION

The present invention relates generally to wireless communication networks, and in particular to a receiver generating SINR back-off values for each transmission mode in the event of data decoding errors.

### BACKGROUND

Wireless communication systems are required to transmit ever-increasing amounts of data, in support of expanded subscriber services, such as messaging, e-mail, music and video streaming, and the like. Transmitting a higher volume of data over a given channel requires transmission at a higher data rate.

One known technique to improve data transmission rates in wireless communications is the use of multiple input, multiple output (MIMO) technology, wherein signals are transmitted from multiple transmit antennas and may be received by multiple receiver antennas. Using advanced coding and modulation schemes, two or more streams of data may be transmitted simultaneously to a receiver, increasing the data rate.

Maintaining high data rates in MIMO systems requires fast scheduling and link adaptation. That is, the transmitter must constantly alter its selection of packets to transmit, and its transmission parameters based on the current characteristics of the channel, which can change rapidly. In a Frequency Division Duplex (FDD) system, the instantaneous downlink channel conditions are not available at the base station, and must be determined by a receiver and communicated to the base station. In Wideband CDMA (WCDMA) and Long Term Extension (LTE), the instantaneous downlink channel conditions are communicated to the base station through a Channel Quality Indicator (CQI).

Estimating the CQI is a delicate task, comprising a number of computational steps, each considering a large number of factors. The transport format selection process at the transmitter is very sensitive to CQI estimation errors. Accordingly, a targeted Block Error Rate (BLER) might be difficult to achieve with poor CQI estimation.

CQI estimation may involve a suggested selection, based on instantaneous channel conditions, of the modulation and coding rate and transport block size that the receiver can support with a given BLER. For MIMO systems, the suggested selection may also include the number of transmitted streams and the optimal precoding matrix.

The capacity that can be supported by a known channel, with additive white Gaussian noise with known variance, is well known. In practice, however, a number of phenomena add to the CQI estimation errors. One error source is the delay between the measurement of CQI and the time the actual transmission takes place. During this period, the channel and interference may change significantly.

Another source of error is channel and noise/interference estimation errors. Channel estimation quality depends on the SNR, delay and Doppler spread, and the power allocated to reference symbols. Channel estimation errors affect not only the SNR calculation for CQI, but also the demodulation performance, and in a way that could be difficult to model. Interference estimation should thus ideally be based on measurements on data channels, and not reference symbols. This is especially the case for orthogonal frequency division multiplex (OFDM) systems like LTE, since the interference situation may be different on reference symbols than on data symbols. However, this may not be feasible since it may be hard to distinguish the signal coming from a receiver's own cell from signals transmitted by the neighbor cells.

One potential solution to improve CQI estimation would be to measure the performance of the UE in various conditions, including SNR, delay and Doppler spread, MIMO transmission mode, different reference symbol powers, bandwidth, and the like. The result could be stored in tables, and multidimensional interpolation employed to determine the CQI for the prevailing conditions. However, due to the large number of parameters affecting CQI, such tables may become prohibitively large, and still may not capture all effects.

A system similar to this is disclosed in the document WO2006/138337.

### SUMMARY

The invention is as defined in the claims.

### BRIEF DESCRIPTION OF THE DRAWINGS

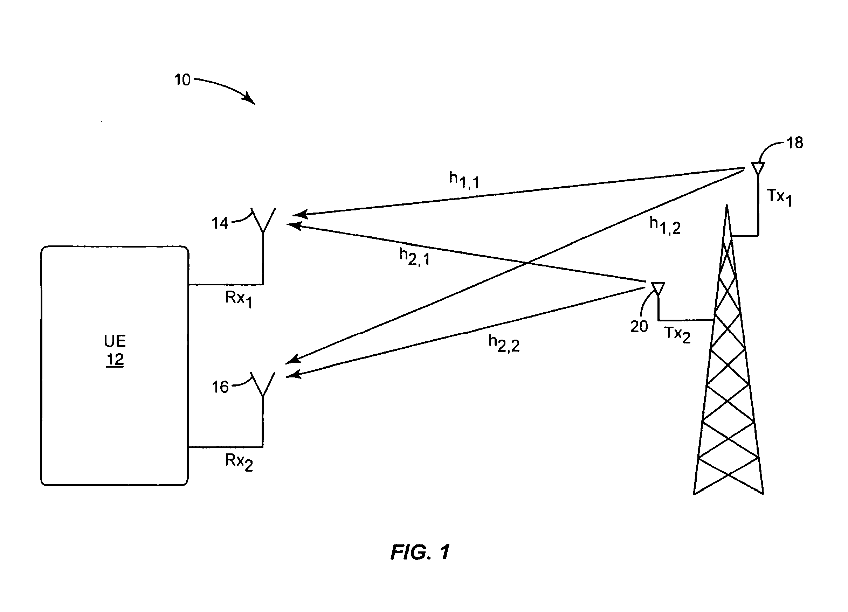

Figure 1 depicts the downlink signal paths in a MIMO wireless communication network 10. A User Equipment (UE) 12, such as a mobile transceiver, receives signals on one or more receive antennas 14, 16. The signals are transmitted from one or more transmit antennas 18, 20. Each signal path experiences different channel conditions, which include impairment effects such as fading, interference, noise, and the like. In general, each channel is unique, as indicated. As known in the art, the transmitters 18, 20 transmit known reference symbols, also referred to as pilot symbols, at known positions within a data frame, to facilitate measurement of the channel conditions by the UE 12. Channel and noise estimates are thus available at the pilot positions.

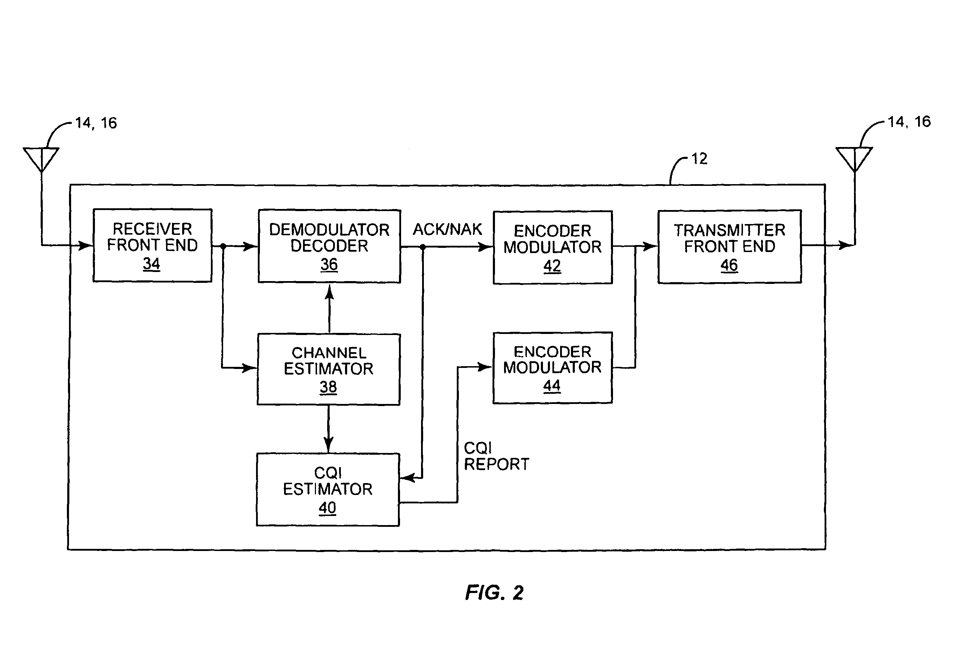

Figure 2 depicts the CQI estimation and feedback path in the UE 12. Downlink signals are received at one or more receive antennas 14, 16, and are processed by receiver front-end circuits 34. Data symbols are demodulated and decoded at block 36. A data error indicator, such as the result of a Cyclic Redundancy Check (CRC), is sent to the transmitter as a positive or negative acknowledgment signal, ACK or NAK, respectively. The ACK/NAK is encoded and modulated at block 42 and forwarded to a transmitter front-end circuit 46 for transmission at the antenna(s) 14, 16. The data are further processed, such as rendered into speech or audio, displayed as text or video, processed as commands, or the like, in various circuits in the UE 12 (not shown).

Pilot signals are provided by the receiver front-end circuits 34 to a channel estimation function 38. The channel estimator 38 generates channel noise and interference estimates, and provides these to the demodulator and decoder function 36, so that it can detect the received data symbols. The channel estimator 38 additionally provides a SINR to the CQI estimator function 40, which estimates a CQI for transmission to the base station for link adaptation. The CQI is provided to an encoder and modulator function 44. Encoded and modulated CQI data are processed by a transmitter front-end 46 and other circuits, and the modulated CQI estimate is transmitted to the base station on one or more antennas 14, 16.

According to one or more embodiments disclosed herein, in order to control the BLER, a back-off strategy is employed to adjust the SINR before it is used to calculate the CQI. As a consequence, the BLER will be closer to the targeted BLER. The input to the calculation of the SINR back-off is whether the latest data packet for each stream was received correctly. This is indicated by a data error indicator, such as the ACK/NAK indicator resulting from the CRC check. As depicted in Figure 2, the ACK/NAK indicator is provided from the demodulator and decoder 36 to the CQI estimation function 40.

Each time a SINR value is calculated in order to update the CQI, it is adjusted by an SINR back-off value. The SINR back-off depends on the transmission mode, which means that the back-off is calculated separately, and may be different, for different transmission modes. The SINR back-off is updated every time a data verification operation, such as a CRC check, is performed. The only input needed is the latest data error indicator. One possible implementation of the SINR back-off calculation is described below.

First, determine the instantaneous BLER in the current TTI (Transmission Time Interval), averaged over all data streams transmitted. Based on the instantaneous BLER, adjust the SINR_back-off for the current transmission mode. The adjustment, positive or negative, is made to achieve a long term BLER rate equal to a predetermined BLER target. The adjustment is positive if the instantaneous BLER rate is larger than the BLER target, and negative otherwise. Also, the adjustment is done in small steps in order to avoid too large fluctuations in the SINR_back-off. There is a delay of several TTIs from the transmission of an uplink CQI report until data can be sent in the downlink. During that delay the downlink transmitter does not know anything about performance of recent transmissions, so there is no point in doing too fast adjustments during this delay. To summarize, when determining the amount of adjustment the UE should take the CQI delay into account. Finally, make sure that the SINR back-off does not exceed the maximum allowed value or is lower than the minimum allowed value

An additional restriction is that if the maximum modulation and coding scheme is chosen for the transmission on any stream, the SINR back-off saturates and should not be reduced for the current transmission mode.

While the SINR back off is described above as being dependent on the transmission mode, this is not necessarily the case. For example, for a receiver employing Successive Interference Cancellation (SIC), the SINR back-off may be applied in the general case when different data streams originate from different users. In the case of a MIMO receiver, the SINR back-off could be different for the different code words, since it is likely that the first code word is not perfectly cancelled, and hence the theoretical performance can not be achieved in reality.

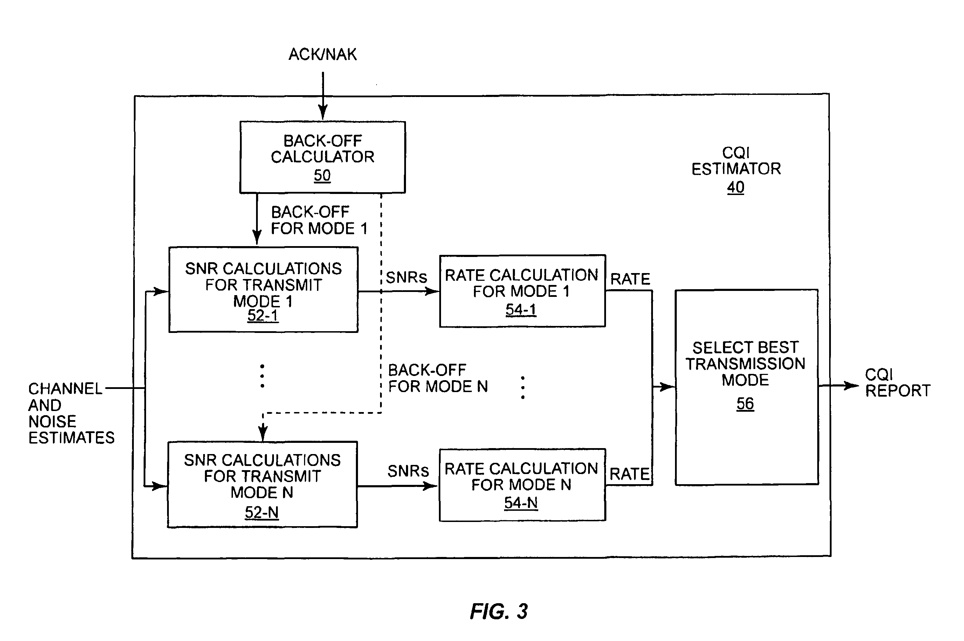

Figure 3 depicts the CQI estimator function 40 in greater detail. An SINR back-off value is calculated for each transmission mode in a back-off calculating function 50, based on the data error indicator for each stream (e.g., the ACK/NAK resulting from a CRC check). The SINR back-off values are provided to SNR calculation functions 52-1, ..., 52-n for each transmission mode. Rate calculation functions 54-1, ..., 54-n then calculate the maximum data rate for each transmission mode that achieves the target BLER. These data rates are then considered by the transmission mode selection function 56, which formats and outputs the selection as a CQI estimate.

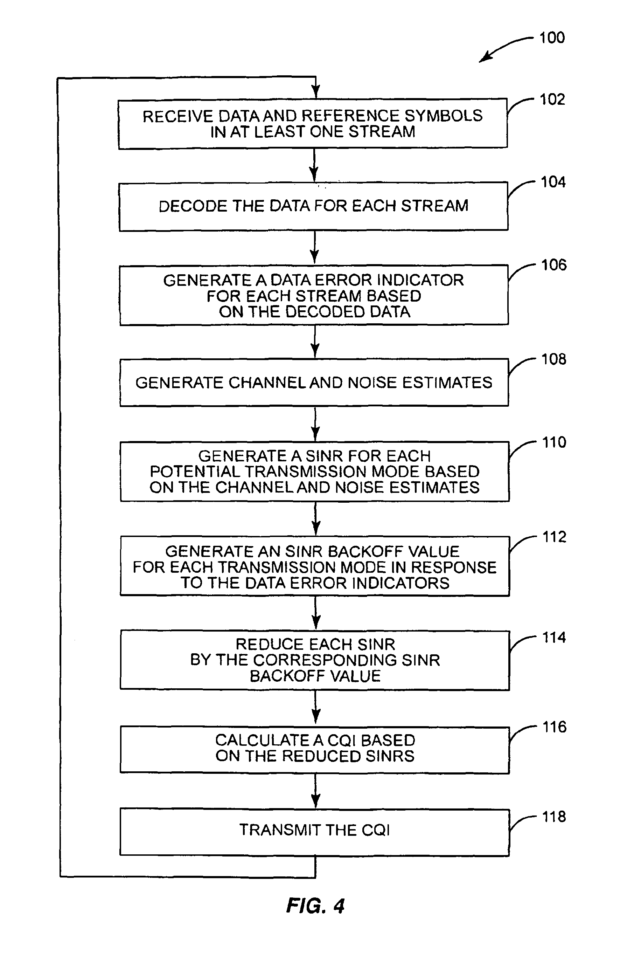

Figure 4 depicts a method 100 of reporting channel quality. A UE 12 receives data and reference symbols in at least one data stream (block 102). The data for each stream is decoded (block 104), and a data error indicator is generated if a data integrity operation, such as a CRC check, indicates an error (block 106). The UE 12 generates channel and noise estimates based on the reference symbols (block 108), and generates a SINR for each potential transmission mode, based on the channel and noise estimates (block 110). An SINR back-off value is generated for each transmission mode in response to the data error indicators (block 112). The SINR values for each transmission mode are reduced (or, if a negative value, increased) by the respective SINR back-off values (block 114), and a CQI is generated in response to the adjusted SINRs (block 116). The CQI estimate is then transmitted to the network 10.

By reducing the SINR estimates for each transmission mode when data are erroneously decoded, more accurate CQI estimates are generated, allowing the receiver BLER to more closely track a targeted BLER.

While the present invention has been described herein as being implemented in a UE, those of skill in the art will readily recognize that the downlink SINR back-off value may be calculated in the base station, rather than the UE, based on the CQI and ACK/NACK reports fed back from UEs, and the known transmission scheme corresponding to the ACK/NACK report. The base station may use an SINR back-off value it calculates to modify the CQI reported by UEs. The SINR back-off value calculated in the base station may not be as accurate as one calculated in the UE, since the base station has much less information available, in the sense that the reported CQI might not contain the full SINR information.

Of course, the base station may also implement the inventive SINR back-off operation to adjust SINR estimates decoding uplink transmissions, to better track a BLER target for uplink transmission.

Those of skill in the art will readily recognize that the functional blocks depicted in Figures 2 and 3 may be implemented as hardwired or programmable electronic circuits, as software modules executing on a microprocessor or digital signal processor (DSP), or any combination of hardware, firmware, and software, as known in the art.

## Claims

1. A method of estimating downlink channel quality by a mobile user equipment (UE) in a wireless communication network operative to transmit signals in a plurality of modes, each mode transmitting data in one or more streams, comprising:
receiving data and reference signals in at least one stream;
decoding the data for each stream;
generating a data error indicator for each stream based on the decoded data;
generating channel and noise estimates based on the reference signals;
generating a signal to interference and noise ratio (SINR) for each potential transmission mode based on the channel and noise, estimates;
generating an SINR back-off value for each transmission mode in response to the data error indicators;
reducing or advancing each SINR by the corresponding SINR back-off value;
calculating a channel quality indicator (CQI) based on the adjusted SINR; and
transmitting the CQI from the UE to the network.

2. The method of claim 1 wherein each data error indicator is based on the result of a cyclic redundancy check (CRC).

3. The method of claim 1 wherein the amount of adjustment of the SINR back-off value is dependent on a delay value.

4. The method of claim 1 wherein the amount of adjustment of the SINR back-off value is dependent on a target data error rate.

5. The method of claim 1 wherein each SINR back-off value is bounded by predetermined values.

6. The method of claim 1 wherein calculating a Channel Quality Indicator (CQI) based on the reduced SINRs comprises calculating a data rate for each transmission mode based on the reduced SINR for that mode, and calculating the CQI based on the rates.

7. The method of claim 2 wherein generating a data error indicator based on the decoded data comprises generating a positive or negative acknowledge signal (ACK/NACK).

8. The method of claim 1 wherein the wireless communication network operates in a multiple input multiple output (MIMO) mode.

9. The method of claim 10 wherein each transmission mode comprises a MIMO rank.

10. The method of claim 1 wherein generating channel and noise estimates comprises using successive interference cancellation (SIC), and wherein each transmission mode comprises a code word.

11. The method of claim 1 wherein generating channel and noise estimates comprises using successive interference cancellation (SIC), and wherein each transmission mode comprises a data stream originating from a different source.

12. The method of claim 13 wherein SIC is employed in a MIMO system and wherein one or more streams are intended for the receiver and one or more other streams are intended for other users.

13. A mobile user equipment (UE) operative in a wireless communication network that transmits signals in a plurality of transmission modes, each mode transmitting data in one or more streams, comprising:
a decoder operative to decode data in one or more streams, and to generate a data error indicator for each stream;
a channel estimator operative to generate channel and noise estimates; and
a Channel Quality Indicator (CQI) estimator receiving the data error indicators and the channel and noise estimates, and operative to generate a CQI report based on a reduced or advanced signal to interference and noise ratio (SINR) calculated for each transmission mode, each reduced or advanced SINR obtained by reducing or advancing an SINR calculated from the channel and noise estimates by a corresponding SINR back off value, the SINR back off value calculated in response to the data error indicators.

14. The UE of claim 15 wherein the CQI estimator calculates the amount of adjustment of SINR back off values based on a delay value.

15. The UE of claim 15 wherein the CQI estimator calculates the amount of adjustment of SINR back off values based on a target data error rate.

16. The UE of claim 15 wherein the SINR back-off values are bounded by predetermined values.

17. The UE of claim 15 wherein the CQI estimator is further operative to calculate a preferred data rate for each transmission mode based on the reduced SINR for that mode.

18. The UE of claim 15 wherein the preferred data rate is the maximum data rate the receiver can accept without exceeding a predetermined data error rate.

19. The UE of claim 15 wherein the CQI estimator is further operative to calculate a CQI based on the rates.

## Patentansprüche

1. Verfahren zur Schätzung der Abwärtskanalqualität durch eine mobile Benutzereinrichtung (UE) in einem drahtlosen Kommunikationsnetz, das dazu dient, Signale in einer Vielzahl von Modi zu übertragen, wobei jeder Modus Daten in einem oder mehreren Strömen überträgt, umfassend:
Empfangen von Daten und Referenzsignalen in mindestens einem Strom;
Decodieren der Daten für jeden Strom:
Erzeugen eines Datenfehlerindikators für jeden Strom auf der Grundlage der decodierten Daten;
Erzeugen von Kanal- und Rauschschätzwerten auf der Grundlage der Referenzsignale;
Erzeugen eines Signal-Rausch- und -Interferenz-Verhältnisses (SINR) für jeden potentiellen Übertragungsmodus auf der Grundlage der Kanal- und Rauschschätzwerte;
Erzeugen eines SINR-Kompensationswertes für jeden Übertragungsmodus als Antwort auf die Datenfehlerindikatoren;
Verringern oder Erhöhen jedes SINR durch den entsprechenden SINR-Kompensationswert;
Berechnen eines Kanalqualitätsindikators (CQI) auf der Grundlage des geänderten SINR; und
Übertragen des CQI von der UE an das Netz.

2. Verfahren nach Anspruch 1, wobei jeder Datenfehlerindikator auf dem Ergebnis einer zyklischen Redundanzprüfung (CRC) beruht.

3. Verfahren nach Anspruch 1, wobei der Änderungsbetrag des SINR-Kompensationswertes von einem Verzögerungswert abhängig ist.

4. Verfahren nach Anspruch 1, wobei der Änderungsbetrag des SINR-Kompensationswertes von einer angestrebten Datenfehlerrate abhängig ist.

5. Verfahren nach Anspruch 1, wobei jeder SINR-Kompensationswert durch vorbestimmte Werte begrenzt ist.

6. Verfahren nach Anspruch 1, wobei das Berechnen eines Kanalqualitätsindikators (CQI) auf der Grundlage der verringerten SINR Folgendes umfasst: Berechnen einer Datenrate für jeden Übertragungsmodus auf der Grundlage des verringerten SINRs für diesen Modus und Berechnen des CQI auf der Grundlage der Raten.

7. Verfahren nach Anspruch 2, wobei das Erzeugen eines Datenfehlerindikators auf der Grundlage der decodierten Daten Folgendes umfasst: Erzeugen eines positiven oder negativen Rückmeldungssignals (ACK/NACK).

8. Verfahren nach Anspruch 1, wobei das drahtlose Kommunikationsnetz in einem Mehrfacheingabe-Mehrfachausgabe-(MIMO-)Modus arbeitet.

9. Verfahren nach Anspruch 10, wobei jeder Übertragungsmodus einen MIMO-Rang aufweist.

10. Verfahren nach Anspruch 1, wobei das Erzeugen von Kanal- und Rauschschätzwerten Folgendes umfasst: Verwenden sukzessiver Interferenzeliminierung (SIC), und wobei jeder Übertragungsmodus ein Codewort aufweist.

11. Verfahren nach Anspruch 1, wobei das Erzeugen von Kanal- und Rauschschätzwerten Folgendes umfasst: Verwenden sukzessiver Interferenzeliminierung (SIC), und wobei jeder Übertragungsmodus einen Datenstrom aufweist, die von einer anderen Quelle stammt.

12. Verfahren nach Anspruch 13, wobei die SIC in einem MIMO-System verwendet wird und wobei ein oder mehrere Ströme für den Empfänger bestimmt sind und ein oder mehrere andere Ströme für andere Benutzer bestimmt sind.

13. Mobile Benutzereinrichtung (UE), die in einem drahtlosen Kommunikationsnetz betriebsfähig ist, das Signale in einer Vielzahl von Übertragungsmodi überträgt, wobei jeder Modus Daten in einem oder mehreren Strömen überträgt, umfassend:
einen Decodierer, der dazu dient, Daten in einem oder mehreren Strömen zu decodieren und einen Datenfehlerindikator für jeden Strom zu erzeugen;
einen Kanalestimator, der dazu dient, Kanal- und Rauschschätzwerte zu erzeugen; und
einen Kanalqualitätsindikator-(CQI-)Estimator, der die Datenfehlerindikatoren und die Kanal- und Rauschschätzwerte empfängt und dazu dient, eine CQI-Meldung auf der Grundlage eines für jeden Übertragungsmodus berechneten, verringerten oder erhöhten Signal-Rausch- und -Interferenz-Verhältnisses (SINR) zu erzeugen, wobei jedes verringerte oder erhöhte SINR dadurch gewonnen wird, dass ein aus den Kanal- und Rauschschätzwerten berechnetes SINR um einen entsprechenden SINR-Kompensationswert verringert oder erhöht wird, wobei der SINR-Kompensationswert als Antwort auf die Datenfehlerindikatoren berechnet wird.

14. UE nach Anspruch 13, wobei der CQI-Estimator den Änderungsbetrag der SINR-Kompensationswerte auf der Grundlage eines Verzögerungswertes berechnet.

15. UE nach Anspruch 13, wobei der CQI-Estimator den Änderungsbetrag der SINR-Kompensationswerte auf der Grundlage einer angestrebten Datenfehlerrate berechnet.

16. UE nach Anspruch 13, wobei die SINR-Kompensationswerte durch vorbestimmte Werte begrenzt sind.

17. UE nach Anspruch 13, wobei der CQI-Estimator ferner dazu dient, eine bevorzugte Datenrate für jeden Übertragungsmodus auf der Grundlage des verringerten SINR für diesen Modus zu berechnen.

18. UE nach Anspruch 13, wobei die bevorzugte Datenrate die maximale Datenrate ist, die der Empfänger ohne Überschreitung einer vorbestimmten Datenfehlerrate aufnehmen kann.

19. UE nach Anspruch 13, wobei der CQI-Estimator ferner dazu dient, einen CQI-Indikator auf der Grundlage der Raten zu berechnen.

## Revendications

1. Procédé destiné à estimer une qualité de canal en liaison descendante par le biais d'un équipement d'utilisateur mobile (UE) dans un réseau de communication sans fil exploitable en vue de transmettre des signaux dans une pluralité de modes, chaque mode transmettant des données dans un ou plusieurs flux, comprenant les étapes ci-dessous consistant à :
recevoir des données et des signaux de référence dans au moins un flux ;
décoder les données de chaque flux ;
générer un indicateur d'erreur de données pour chaque flux, sur la base des données décodées ;
générer des estimations de bruit et de canal sur la base des signaux de référence ;
générer un rapport signal sur bruit et brouillage (SINR) pour chaque mode de transmission potentiel sur la base des estimations de bruit et de canal ;
générer une valeur de diminution de rapport SINR pour chaque mode de transmission en réponse aux indicateurs d'erreur de données ;
réduire ou améliorer chaque rapport SINR par la valeur de diminution de rapport SINR correspondante ; et
calculer un indicateur de qualité de canal (CQI) sur la base du rapport SINR ajusté ; et
tansmettre l'indicateur CQI de l'équipement UE au réseau.

2. Procédé selon la revendication 1, dans lequel chaque indicateur d'erreur de données est basé sur le résultat d'un contrôle par redondance cyclique (CRC).

3. Procédé selon la revendication 1, dans lequel la quantité d'ajustement de la valeur de diminution de rapport SINR dépend d'une valeur de retard.

4. Procédé selon la revendication 1, dans lequel la quantité d'ajustement de la valeur de diminution de rapport SINR dépend d'un taux d'erreur de données cible.

5. Procédé selon la revendication 1, dans lequel chaque valeur de diminution de rapport SINR est délimitée par des valeurs prédéterminées.

6. Procédé selon la revendication 1, dans lequel l'étape consistant à calculer un indicateur de qualité de canal (CQI) sur la base des rapports SINR réduits comprend l'étape consistant à calculer un débit de données pour chaque mode de transmission sur la base du rapport SINR réduit pour ce mode, et l'étape consistant à calculer l'indicateur CQI sur la base des taux.

7. Procédé selon la revendication 2, dans lequel l'étape consistant à générer un indicateur d'erreur de données sur la base des données décodées comporte l'étape consistant à générer un signal d'accusé de réception ou un signal d'accusé de non-réception (ACK/NACK).

8. Procédé selon la revendication 1, dans lequel le réseau de communication sans fil opère en mode « entrées multiples, sorties multiples » (MIMO).

9. Procédé selon la revendication 10, dans lequel chaque mode de transmission comprend un rang MIMO.

10. Procédé selon la revendication 1, dans lequel l'étape consistant à générer des estimations de bruit et de canal comprend l'étape consistant à utiliser une suppression de brouillage successif (SIC), et dans lequel chaque mode de transmission comprend un mot de code.

11. Procédé selon la revendication 1, dans lequel l'étape consistant à générer des estimations de bruit et de canal comprend l'étape consistant à utiliser une suppression de brouillage successif (SIC), et dans lequel chaque mode de transmission comprend un flux de données provenant d'une source distincte.

12. Procédé selon la revendication 13, dans lequel la suppression SIC est employée dans un système MIMO et dans lequel un ou plusieurs flux sont destinés au récepteur et un ou plusieurs autres flux sont destinés à d'autres utilisateurs.

13. Équipement d'utlisateur mobile (UE) exploitable dans un réseau de communication sans fil qui transmet des signaux dans une pluralité de modes de transmission, chaque mode transmettant des données dans un ou plusieurs flux, comprenant :
un décodeur exploitable de manière à décoder des données dans un ou plusieurs flux, et à générer un indicateur d'erreur de données pour chaque flux ;
un estimateur de canal exploitable de manière à générer des estimations de bruit et de canal ; et
un estimateur d'indicateur de qualité de canal (CQI) recevant les indicateurs d'erreur de données et les estimations de bruit et de canal, et exploitable de manière à générer un rapport d'indicateur CQI sur la base d'un rapport signal sur bruit et brouillage (SINR), réduit ou amélioré, calculé pour chaque mode de transmission, chaque rapport SINR réduit ou amélioré étant obtenu en réduisant ou améliorant un rapport SINR calculé à partir des estimations de bruit et de canal, par une valeur de diminution de rapport SINR correspondante, la valeur de diminution de rapport SINR étant calculée en réponse aux indicateurs d'erreur de données.

14. Équipement UE selon la revendication 13, dans lequel l'estimateur d'indicateur CQI calcule la quantité d'ajustement de valeurs de diminution de rapport SINR sur la base d'une valeur de retard.

15. Équipement UE selon la revendication 13, dans lequel l'estimateur d'indicateur CQI calcule la quantité d'ajustement de valeurs de diminution de rapport SINR sur la base d'un taux d'erreur de données cible.

16. Équipement UE selon la revendication 13, dans lequel les valeurs de diminution de rapport SINR sont délimitées par des valeurs prédéterminées.

17. Équipement UE selon la revendication 13, dans lequel l'estimateur d'indicateur CQI est en outre exploitable de manière à calculer un débit de données préféré pour chaque mode de transmission sur la base du rapport SINR réduit pour ce mode.

18. Équipement UE selon la revendication 13, dans lequel le débit de données préféré est le débit de données maximum que le récepteur peut accepter sans dépasser un taux d'erreur de données prédéterminé.

19. Équipement UE selon la revendication 13, dans lequel l'estimateur d'indicateur CQI est en outre exploitable de manière à calculer un indicateur CQI sur la base des taux.
